# EUROPEAN PATENT SPECIFICATION

(11) **EP 3 868 555 B1**
(45) Date of publication and mention of the grant of the patent: **23.09.2026**
(21) Application number: 20158793.8
(22) Date of filing: 21.02.2020
(51) Int. Cl.: B32B 5/24, B32B 1/08, B32B 5/02, B32B 5/18, B32B 7/022, B32B 7/12, B32B 15/04, B32B 15/14, B32B 15/20, E04B 1/74, F16L 59/02

(54) **MULTILAYER INSULATION PRODUCT**
MEHRSCHICHTIGES ISOLIERUNGSPRODUKT
PRODUIT D'ISOLATION MULTICOUCHES

(43) Date of publication of application: 25.08.2021
(73) Proprietor: Armacell Enterprise GmbH & Co. KG, 12529 Schönefeld OT Waltersdorf (DE)
(72) Inventor: ZHENG, Zhicheng, 48161 Münster (DE); ZAUNER, Christoph, 48366 Laer (DE); MÖLLER, Stephan, 48161 Münster (DE); MELLER, Mika, 00990 Helsinki (FI); PETRI, Marcel, 34131 Kassel (DE); DOLEGA, Justyna, 4650 Chaineux (BE)
(74) Representative: Vossius & Partner Patentanwälte Rechtsanwälte mbB

(56) References cited:
- EP-A1- 2 942 193
- US-A1- 2012 135 202
- US-B2- 8 784 962

## Description

### TECHNICAL FIELD

The present invention relates to a multilayer insulation product (MIP), a process of producing the MIP and the use of the same.

### BACKGROUND OF THE INVENTION

Manifold solutions are available on the market for the insulation of mechanical equipment, e.g. in commercial and residential construction as well as industrial applications and the oil and gas industry.

Insulation products applied to heating and plumbing, HVAC (heating, ventilation and air conditioning) ducts and systems for commercial construction in non-residential buildings (such as hospitals, hotels and offices) as well as residential construction are mainly based upon polymeric foams. Light and heavy industry increase the use of such foams in plants, technical engineering facilities, trains and ships primarily for refrigeration, HVAC ducts and systems, coolants distribution and steam transportation equipment.

The reasons for choosing polymeric foam are manifold: They can be made watertight and therefore prevent corrosion under insulation, can have good thermal and acoustic insulation properties and they are comparatively easy to apply due to their flexibility, easy cuttability and bendability with one-component adhesives.

Polymeric foams for such applications comprise two major product groups, flexible elastomeric foams (FEFs) and polyethylene foams (PEFs). FEFs are expanded by chemical blowing agents or physical blowing agents, mainly by chemical blowing agents. They may be crosslinked and are capable of comprising high levels of fillers, additives etc. PEFs are expanded by physical foaming agent. Such foam comprises a low level of fillers due to the fact that high loadings lead to an overnucleation and collapse of the foam. Therefore, the modification of such foams is limited. Since the use of plasticizers and additives is very limited, the flexibility is also much worse compared to FEFs, leading to a significantly higher amount of cutting during installation, which is a drawback in terms of installation time and cost. Therefore, FEFs are the products of choice for the majority of applications.

Single burning item (SBI) fire test method (EN 13823) was accepted in CEN (European Committee for Standardization) as a European test method in autumn 2001 and implemented in national regulations afterwards. The test focuses on three aspects of the burning behavior: Flame spread/heat release, smoke production and flaming droplets. Since SBI-test replaced the former national test for evaluation of the fire performance, smoke development came to the fore for building products - including FEFs - which was not covered by the national test.

Due to the raising demands for high fire resistance and low smoke insulation products, conventional FEFs need improvement to meet the new requirements.

New compounds based upon intrinsic, flame retardant elastomers are developed to substitute or reduce the level of (especially brominated) flame retardants which create high amounts of black smoke. The development of new compounds comprises intrinsic flame-retardant polymers. Such materials are based upon halogenated polymers such as chloroprene rubber (CR), chlorosulfonated polyethylene (CSM) etc. and combinations of such polymers. Examples can be found in EP 3 006 491 A1 which discloses an expanded polymer (blend) based on polyvinyl chloride (PVC) and/or its copolymers and/or its terpolymer and at least one additional chlorinated organic polymer, EP 2 261 305 B1 where an elastomeric material comprises 50 wt% of polychloroprene and 25 wt% of chloroparaffin is disclosed, and EP 3 165 562 A1 which describes a chlorosulfonated polyethylene based FEF.

Another approach for high fire resistance and low smoke insulation products are multilayer systems or coatings on top of FEFs to protect or retard ignition/combustion of the FEF underneath. Such approaches use two or even three (impermeable) layers on top of conventional FEFs to improve fire resistance and decrease smoke release of such foams.

One example of such a multilayer system is described in EP 2 345 535 A1, where a FEF is covered by a one or two glass fiber layer(s) which disperses the flame and lowers the heat penetration and one metal foil which reflects the flame and entraps the combustible gas.

EP 2 942 193 A1 describes another approach for a multilayer system. The described multilayer product comprises two intumescent and/or char forming layers which may form a char to prevent air contact with the substrate in case of fire.

US 2012 135 202 discloses another approach for a multilayer system. The described multilayer product comprises an inner layer of expanded polymer blend and an outer layer comprising chlorinated organic polymer and a fibrous material.

However, there is still the need to produce more sophisticated MIPs.

### SUMMARY OF THE INVENTION

### Problems of the prior art products

Although FEFs can be highly flame retardant, they often create a lot of smoke. The majority of FEF sheets for aforementioned applications are based upon nitrile butadiene rubber/polyvinyl chloride (NBR/PVC) blends and are classified as "B-s3, d0" according to the SBI test (e.g. AF/Armaflex^{®}, Kaiflex^{®} KKplus s3, K-Flex ST). This means, that such FEFs achieve the highest possible flame resistance for organic polymers/organic polymer foams (B) and do not create burning droplets (d0), but they are classified in the worst group for smoke development (s3).

New compounds based upon intrinsic, flame retardant elastomers (EP 2 261 305 B1 and EP 3 165 562 A1) achieve a "B-s2, d0" classification for sheets, but they also show several drawbacks compared to conventional NBR/PVC based FEFs: The products are significantly higher in costs (due to higher costs of the raw materials and higher final product densities) and the technical properties, e.g. thermal conductivity (according to DIN EN 12667) and water vapor transmission (WVT) resistance (according to DIN EN 12086), are worse (Armaflex^{®} Ultima sheets - CR based - thermal conductivity at 0 °C: ≤0.0400 W/(m·K), Kaiflex^{®} KKplus s2 sheets-CSM based-thermal conductivity at 0 °C: ≤0.0380 W/(m·K), AF/Armaflex^{®} sheets and Kaiflex^{®} KKplus s3 sheets-NBR/PVC based - thermal conductivity at 0 °C≤0.0330 W/(m·K)).

Conventional multilayer systems (EP 2 345 535 A1 and EP 2 942 193 A1) may overcome some of the drawbacks such as insufficient insulation properties (e.g. WVT, thermal conductivity). The improvement of mechanical strength caused by the layers on top of FEFs is beneficial for industrial applications. Such top layers may improve tear strength, tear resistance, puncture resistance, etc., which are in particular beneficial for industrial application, as they might decrease the risk of damage during installation and use. However, they have several other drawbacks: they can only be applied to sheets. Using these approaches for tubes worsen the SBI test results due to a chimney effect, caused by the impermeable layers on top of the foam. This leads to accelerated and more complete combustion of the FEF underneath. Furthermore, such layers are very stiff compared to FEFs without such coverings. This leads to worse bendability, limiting the use of such multilayer systems to weakly curved surfaces. Beside the bendability, the cuttability of such multilayer systems is even worse, which is a major drawback during installation. Usually FEFs are cut on site with knifes, which is impossible for such multilayer systems, leading to increased effort and therefore time and costs of installation.

In addition to the technical drawbacks, the optical appearance of the multilayer system is insufficient. Due to the fact that such approach can only be applied to FEF sheet material, tubes and sheets within a single installation look different. Moreover, the missing flexibility of such layers creates tension within the installation, which can e.g. result in rupture of adhesive seams and therefore insulation weaknesses within the installation. In case of reverse bending, wrinkles are formed on the surfaces.

Therefore, there is a need for an insulation product of high flame retardancy which creates low level of smoke and has good optical appearance. At the same time, the insulation product should have favourable properties as regards mechanical strength, thermal conductivity and water vapor transmission. Particularly, the insulation product should be applicable on and/or in a form of sheet as well as tube.

### Object of the invention

An object of the present invention is to provide a highly flame resistant, low smoke multilayer insulation product not showing one or more of the aforementioned disadvantages of the prior art insulation products.

Specifically, the insulation product of the invention should have high flame resistance and low smoke production, should be applicable for tubes and sheets; thermal conductivity, WVT, flexibility and optical appearance of the insulation product should be comparable to conventional NBR/PVC based FEFs and the mechanical resistance should be preferably improved.

Accordingly, the present invention provides a multilayer insulation product (MIP) comprising at least three layers A, B and C. The first layer A is an outer layer (i.e. arranged at the side exposed to flames in case of fire). Layer A comprises at least one flexible elastomeric foam (FEF), wherein layer A
(a1) has a thickness of at least 2 mm,
(a2) has a thermal conductivity of ≤0.0500 W/(m·K) at 0 °C according to DIN EN 12667 when measured as a sheet or DIN EN ISO 8497 when measured as a tube, and
(a3) has a fire growth rate (FIGRA) value ≤ 250 W/s, a total heat release (THR₆₀₀ₛ) ≤ 15.0 MJ, a smoke growth rate (SMOGRA) ≤ 180 m²/s², and a total smoke production (TSP₆₀₀ₛ) ≤ 200 m² according to EN 13823 when measured as a sheet; or
   a fire growth rate (FIGRA) value ≤ 460 W/s, a total heat release (THR₆₀₀ₛ) ≤15.0 MJ, a smoke growth rate (SMOGRA) ≤ 580 m²/s², and a total smoke production (TSP₆₀₀ₛ) ≤ 1600 m² according to EN 13823 when measured as a tube;

The second layer B, which is arranged between layer A and layer C, comprises at least one layer of fibrous woven or nonwoven material, wherein the inorganic fibrous material is selected from glass fiber, mineral fiber, ceramic fiber or any combination thereof, wherein layer B has a grammage of ≤ 200 g/m².

The third layer C, which is an inner layer, comprises at least one layer of insulation material. Layer C has a thickness equal to or greater than the thickness of layer A and has a thermal conductivity of ≤ 0.0400 W/(m·K) at 0 °C according to DIN EN 12667 when measured as a sheet or DIN EN ISO 8497 when measured as a tube. 25.

### DESCRIPTION OF DRAWINGS

The foregoing summary, as well as the following detailed description of the invention, will be better understood when read in conjunction with the appended drawings. For the purpose of illustrating the invention, there are shown in the drawing embodiments which are presently preferred.

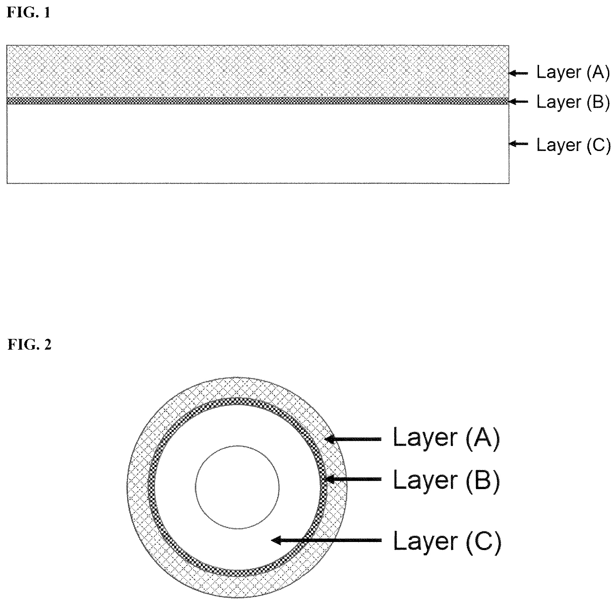

Figure 1 is a schematic illustration of an embodiment of the present invention when the MIP of the invention is in the form of a sheet.
Figure 2 is another schematic illustration of an embodiment of the present invention when the MIP of the invention is in the form of a tube.

### DETAILED DESCRIPTION OF THE INVENTION

As used herein, the term "inner layer" refers to a layer that is positioned on the inside of the multilayer insulation product, i.e. directed to the substrate to be insulated. Preferably, the inner layer is in direct contact with the substrate.

Whereas the term "outer layer" means a layer oriented away from the substrate to the environment, i.e. arranged at the side exposed to flames in case of fire. An outer layer may or may not be the outmost layer. In some embodiments, an outer layer may be covered with additional layer(s) for further protection or decoration. However, in preferred embodiments the outer layer is the outmost layer (i.e. will be in direct contact with flames in case of fire).

As used herein, the term "elastomer" may be used instead of the term "rubber". Rubbers are predominantly amorphous polymers with a glass transition temperature below room temperature. The term "elastomer" refers to any polymer that displays rubber-like elasticity.

As used herein, the term "nonwoven" refers to any material of fibers, continuous filaments, or chopped yarns of any nature or origin, that have been formed into a web by any means, and bonded together by any means, with the exception of weaving or knitting.

As used herein, the term "woven" refers to any material of fibers, continuous filaments, or chopped yarns of any nature or origin, which have been mechanically assembled in a non-random manner by weaving, knitting, bonding, felting, tufting and the like.

As used herein, the term "sheet" is not limited to any particular shape. For example, the sheet may have a rectangular shape, a circular shape, a polygonal shape or irregular shape. "Sheet" in the present invention is not limited to a two-dimensional shape, i.e. planar or flat form. Unless otherwise indicated, "sheet" can also encompass three-dimensional shapes, i.e. in a curved form, a bended form, a conical form or a folded form. The insulation product of the present invention, either being cut or formed in a form of sheet, can be applied on a substrate with flat, curved, conical or cylindrical surface.

A "tube" can be a hollow cylinder. The cross section of a tube may be in a shape of concentric circle, concentric ellipse, concentric polygon or concentric irregular shape. The insulation product of the present invention in a form of a tube encompasses those integrally produced by such as molding or extruding, and those produced from bending and jointing a sheet to form a cylindrical shape. Therefore, it can be applied on a straight or curved tube such as a pipe.

### Layer A

The multilayer insulation product (MIP) of the present invention comprises at least one of layer A. Layer A is an outer layer and comprises at least one FEF.

In one embodiment, layer A is the outmost layer of the MIP.

The thickness of layer A is at least 2 mm, preferably at least 4 mm and more preferably at least 5 mm. A thickness of at least 2 mm is necessary to achieve the desired fire performance. A thickness of at least 5 mm can be beneficial in terms of compensating wrinkles within layer B after bending, resulting in a smooth and flat surface of the claimed MIP.

It is understood that the thickness is measured by commonly used tools in the related art, for instance a vernier caliper or any equivalent tools.

For example, thickness is measured according to DIN EN 823.

Thermal conductivity of layer A is of ≤0.0500 W/(m·K), preferably ≤0.0450 W/(m·K), especially preferred ≤0.0400 W/(m·K) at 0 °C according to DIN EN 12667 when layer A is measured as a sheet or DIN EN ISO 8497 when layer A is measured as a tube. Due to the fact that the multilayer insulation product (MIP) preferably has a thermal conductivity comparable to conventional NBR/PVC based FEFs (≤0.0350 W/(m·K)), a thermal conductivity of layer A of ≤0.0400 W/(m·K) is of minor or even no impact for the complete MIP. A thermal conductivity of layer A of ≤ 0.0450 W/(m·K) has a small impact while a thermal conductivity above 0.0500 W/(m·K) results in a thermal conductivity of >0.0400 W/(m·K) for MIP which is not acceptable.

Layer A significantly influences the fire resistance of the MIP. As an example, layer A needs to be classified as "B-s2, d0" or "B_{L}-s2, d0" if the target classification for the MIP is "B-s2, d0" according to EN 13823 (SBI test). Such rating needs to be achieved at the applied thickness of layer A within the MIP.

In one embodiment, the fire resistance of layer A is measured in a form of a tube. Layer A has a fire growth rate (FIGRA) value ≤460 W/s, preferably ≤400 W/s, more preferably ≤340 W/s, further preferably ≤280 W/s, even more preferably ≤ 270 W/s, even further preferably ≤250 W/s, most preferably ≤100 W/s; a total heat release (THR₆₀₀ₛ) ≤15.0 MJ, preferably ≤10.0 MJ, more preferably ≤ 7.5 MJ, further preferably ≤ 5 MJ, even more preferably ≤ 3.0 MJ; a smoke growth rate (SMOGRA) ≤580 m²/s², preferably ≤ 400 m²/s², more preferably ≤ 340 m²/s², further preferably ≤ 300 m²/s², even more preferably≤ 105 m²/s²; and a total smoke production (TSP₆₀₀ₛ) ≤1600 m², preferably ≤ 1450 m², more preferably ≤ 1300 m², further preferably ≤ 1100 m², even more preferably ≤ 1000 m², most preferably ≤ 800 m². In some embodiments a TSP₆₀₀ₛ values ≤ 600 m², preferably ≤400 m², more preferably ≤ 250 m² and further preferably ≤200 m², according to EN 13823 are most preferable.

In one embodiment, layer A has a fire growth rate (FIGRA) value ≤460 W/s, a total heat release (THR₆₀₀ₛ) ≤15.0 MJ, a smoke growth rate (SMOGRA) ≤580 m²/s², and a total smoke production (TSP₆₀₀ₛ) ≤1600 m² according to EN 13823 when measured in a form of a tube.

In one embodiment, layer A has a fire growth rate (FIGRA) value ≤400 W/s, a total heat release (THR₆₀₀ₛ) ≤10.0 MJ, a smoke growth rate (SMOGRA) ≤400 m²/s², and a total smoke production (TSP₆₀₀ₛ) ≤1300 m² according to EN 13823 when measured in a form of a tube.

In one embodiment, layer A has a fire growth rate (FIGRA) value ≤340 W/s, a total heat release (THR₆₀₀ₛ) ≤5.0 MJ, a smoke growth rate (SMOGRA) ≤340 m²/s², and a total smoke production (TSP₆₀₀ₛ) ≤1000 m² according to EN 13823 when measured in a form of a tube.

In one embodiment, layer A has a fire growth rate (FIGRA) value ≤280 W/s, a total heat release (THR₆₀₀ₛ) ≤3.0 MJ, a smoke growth rate (SMOGRA) ≤300 m²/s², and a total smoke production (TSP₆₀₀ₛ) ≤800 m² according to EN 13823 when measured in a form of a tube.

In one embodiment, layer A has a fire growth rate (FIGRA) value ≤270 W/s, a total heat release (THR₆₀₀ₛ) ≤7.5 MJ, a smoke growth rate (SMOGRA) ≤105 m²/s², and a total smoke production (TSP₆₀₀ₛ) ≤250 m² according to EN 13823 when measured in a form of a tube.

In another embodiment, the fire resistance of layer A is measured in a form of a sheet. Layer A has a fire growth rate (FIGRA) value ≤250 W/s, preferably ≤180 W/s, more preferably ≤140 W/s, further preferably ≤120 W/s, even more preferably ≤100 W/s; a total heat release (THR₆₀₀ₛ) ≤15.0 MJ, preferably ≤10.0 MJ, more preferably ≤ 7.5 MJ, further preferably ≤ 5.0 MJ, even further preferably ≤ 3.0 MJ, even more preferably ≤ 2.0 MJ; a smoke growth rate (SMOGRA) ≤180 m²/s², preferably ≤170 m²/s², more preferably ≤160 m²/s², further preferably ≤150 m²/s²; and a total smoke production (TSP₆₀₀ₛ) ≤200 m², preferably ≤180 m², more preferably ≤160 m², further preferably ≤140 m², even more preferably ≤100 m², even more preferably ≤50 m² according to EN 13823.

In one embodiment, layer A has a fire growth rate (FIGRA) value ≤250 W/s, a total heat release (THR₆₀₀ₛ) ≤15.0 MJ, a smoke growth rate (SMOGRA) ≤180 m²/s², and a total smoke production (TSP₆₀₀ₛ) ≤200 m² according to EN 13823 when measured in a form of a sheet.

In one embodiment, layer A has a fire growth rate (FIGRA) value ≤180 W/s, a total heat release (THR₆₀₀ₛ) ≤10.0 MJ, a smoke growth rate (SMOGRA) ≤170 m²/s², and a total smoke production (TSP₆₀₀ₛ) ≤180 m² according to EN 13823 when measured in a form of a sheet.

In one embodiment, layer A has a fire growth rate (FIGRA) value ≤140 W/s, a total heat release (THR₆₀₀ₛ) ≤5.0 MJ, a smoke growth rate (SMOGRA) ≤160 m²/s², and a total smoke production (TSP₆₀₀ₛ) ≤160 m² according to EN 13823 when measured in a form of a sheet.

In one embodiment, layer A has a fire growth rate (FIGRA) value ≤100 W/s, a total heat release (THR₆₀₀ₛ) ≤3.0 MJ, a smoke growth rate (SMOGRA) ≤150 m²/s², and a total smoke production (TSP₆₀₀ₛ) ≤140 m² according to EN 13823 when measured in a form of a sheet.

In one embodiment, layer A has a fire growth rate (FIGRA) value ≤120 W/s, a total heat release (THR₆₀₀ₛ) ≤7.5 MJ, a smoke growth rate (SMOGRA) ≤30 m²/s², and a total smoke production (TSP₆₀₀ₛ) ≤50 m² according to EN 13823 when measured in a form of a sheet.

In one preferred embodiment, layer A is classified as C- s2, d0 according to EN 13823 (SBI test) when layer A is measured as a sheet.

In another preferred embodiment, layer A is classified as C_{L}- s2, d0 according to EN 13823 (SBI test) when layer A is measured as a tube.

Layer A, preferably the flexible elastomeric foam, may comprise at least 10 wt%, preferably at least 15 wt% of polymers.

Layer A, preferably the flexible elastomeric foam, may comprise at least one polymer selected from, but not limited to, ethylene propylene diene elastomer (EPDM), chloroprene rubber (CR), chlorosulfonated polyethylene (CSM), styrene-butadiene rubber (SBR), nitrile butadiene rubber (NBR), polyvinyl chloride (PVC), chlorinated polyethylene (CPE or CM), bromobutyl rubber (BIIR), chlorobutyl rubber (CIIR), polyurethane (PU) or any combination thereof. Preferably, layer A comprises CR, CSM or CPE and/or CM.

For example, the polymer used in FEF may comprise at least one elastomer or thermoplastic/elastomer blend. Moreover, the elastomer or thermoplastics may also be halogenated, such as chlorinated. Examples of blend can be NBR/PVC, NBR/CPE, CR/CPE, SBR/PVC, SBR/CPE or EPDM/CPE and the like.

Layer A, preferably the flexible elastomeric foam, may additionally comprise elastomers or thermoplastic elastomers of all other kinds, such as ACM/AEM (acrylic elastomers), AU/EU (polyurethanes), BR (butadiene rubber), (G)(E)CO (epichlorohydrin elastomers), EVM (ethylene/vinylacetate copolymers), (H)NBR ((hydrogenated) nitrile butadiene rubber), FKM/F(E)PM (fluoroelastomers), GPO (propylene oxide rubber), IR (isoprene rubber), IIR (isobutylene isoprene rubber), (V)MQ (silicone rubber), NR (natural rubber), T (polysulfide rubber). Furthermore, the present material may further comprise polymers like PE (polyethylene), PP (polypropylene), PET (polyethylene terephthalate), PBT (polybutylene terephthalate), PC (polycarbonate), PS (polystyrene), PA (polyamide), PU (polyurethane), PTFE (polytetrafluoroethylene), PMMA (polymethyl methacrylate) etc..

Layer A, preferably the flexible elastomeric foam, may be crosslinked or not crosslinked, preferably crosslinked. The crosslinked flexible elastomer foam may comprise at least one crosslinking system comprising peroxides, silane coupling agent, radiation activators (for radiation or UV curing), sulphur compounds, bisphenolics, metal oxides or combinations thereof.

Layer A, preferably the flexible elastomeric foam, may be expanded by at least one expansion agent which produces uniform and fine cell structure in elastomer. Suitable expansion agents may be chosen from chemical expansion agents which release carbon dioxide, nitrogen or water by the influence of heat and/or physical expansion agents such as CO₂, N₂, inert gas or combinations thereof.

Layer A, preferably the flexible elastomeric foam, may be expanded, resulting in a density of layer A according to ISO 845 being less than 150 kg/m³, preferably less than 100 kg/m³, more preferably less than 80 kg/m³. Layer A with a lower density reduces the cost of installation. Especially, the inventive production method also comprises embodiments wherein layer A or the combination of layer A and B is installed on site installation on layers B and C or C, respectively.

Layer A, preferably the flexible elastomeric foam, may further comprise a heat and/or reversion stabilizer system chosen from the classes of carbon blacks, metal oxides and hydroxides, metal organic complexes, radical scavengers, complex silicate and combinations thereof.

Layer A, preferably the flexible elastomeric foam, may further comprise a fire retardant system. A fire retardant system may comprise chemicals chosen from inorganic fire retardants such as halogenated compounds, phosphorus compounds, metallic oxides, metallic carbonates, metallic hydroxides and the like, organic fire retardants such as chlorinated paraffins, brominated aromatics and chloroalicyclics and any combination thereof, and/or may comprise a polymeric flame retardant which has a halogen, preferably a bromine content of at least 50 wt%. Suitable examples of fire retardants are antimony trioxide, antimony pentoxide, alumina trihydrate, magnesium hydroxide, zinc borate, zinc stannate, zinc hydroxystannate, calcium carbonate, magnesium carbonate, tin oxide, zinc hydroxystannate, zinc molybdate, molybdenum oxide, ammonium octamolybdate, stannous oxide, tungsten oxide, bismuth oxide, bismuth oxychloride, arsenic trioxide, arsenic pentoxide, vanadium oxide, zirconium oxide, phosphate esters, ammonium polyphosphate, clay, talc, silica, carbon black, chlorinated paraffins, decabromodiphenyl oxide, ethylene bis(tetrabromophthalimide), brominated epoxy polymer, brominated polyphenyl ether and the like.

In order to achieve the targeted SBI classification for layer A, it is understood that the above list of flame retardants is only illustrative and the flame retardants may be used in combination or used interchangeably. The fire retardants are added in FEF in an amount which is known in the art. The fire retardants can be added in an amount such as that disclosed in EP 3 372 631 A1, EP 2 450 398 B1, EP 3 006 491 A1, EP 2 261 305 B1, EP 3 165 562 A1 and Dick, John S., ed. Chapter 22 of Rubber technology: compounding and testing for performance. Carl Hanser Verlag GmbH Co KG, 2014.

Layer A, preferably the flexible elastomeric foam, may further comprise at least one inorganic filler, preferably of metal and/or half metal chalcogen (i.e. compound of oxygen, sulphur) nature. The inorganic filler may be an aluminium compound, such as aluminium silicates, oxides, hydroxides etc. like ATH (aluminium hydroxide), a silicon based compound, such as silicates, quartz, zeolites etc., and/or mineral based fillers such as gypsum, clay, huntite, hydromagnesite, perlite, vermiculite, chalk, slate, graphite, talc/mica etc., or any mixtures thereof.

Layer A, preferably the flexible elastomeric foam, may further comprise plasticizers such as halogenated paraffins, phosphate plasticizer, phthalates, compounds derived therefrom and any combination thereof.

Layer A, preferably the flexible elastomeric foam, may further comprise additives such as biocides, stabilizers (e.g. versus UV, ozone, reversion etc.), pigment, antioxidant, processing aids etc., including additives for improving its manufacturing, application and performance, such as inhibitors, retarders, accelerators, etc..

It is understood that layer A, preferably the flexible elastomeric foam, achieves the target SBI classification of the MIP. For example, layer A, preferably FEF, may achieve C-s2, d0 according to EN 13823 when layer A is measured as a sheet, or layer A, preferably FEF, may achieve C_{L}-s2, d0 according to EN 13823 when layer A is measured as a tube.

In one embodiment, the FEF suitable for use in layer A comprises at least 30 phr (parts per hundred rubber) styrene substituted organic polymer, at least 10 phr of a chlorinated organic polymer of thermoplastic or thermoplastic elastomer and at least 30 phr of halogenated paraffin, halogenated fatty acid substituted glycerine, where a total content is 100 phr. In another preferred embodiment, the FEF suitable for use in layer A, which consists of at least 200 phr, preferably at least 300 phr, but less than 1000 phr ingredients in total, comprises 100 phr of at least one polymer of which at least one is sulphur and/or metal oxide crosslinkable elastomer and at least 40 phr of at least one polymeric flame retardant.

In another preferred embodiment, the FEF suitable for use in layer A, which consists of at least 300 phr, preferably at least 400 phr, but less than 1000 phr ingredients in total, comprises 100 phr of at least two polymers, of which at least 55 phr of PVC or vinyl chloride copolymer or vinyl chloride terpolymer or a mixture thereof and at least 15 phr of at least one additional chlorinated organic polymer, and at least 80 phr of at least one inorganic filler.

In another preferred embodiment, the FEF suitable for use in layer A comprises an elastomeric material containing 50 to 100 percent by weight of polychloroprene based on the total polymer content and more than 25 percent by weight of chloroparaffin based on the total polymer content, wherein the material is vulcanized and expanded and contains fillers and additives.

In another preferred embodiment, the FEF suitable for use in layer A comprises at least one type of chlorosulfonated polyethylene (CMS) in an amount of 40 to 80 phr, at least one halogenated organic substance with a molecular weight of at least 500 g/mol in an amount of 15 to 150 phr, at least one polymer consisting of repeating units of the general formula [-CH₂(R₂)C(R₁)]ₘ-[HC=C(R)-]ₙ, at least one halogen-containing polymer in an amount of 5 to 45 phr, at least one suitable crosslinking agent in an amount of 5 to 50 phr, at least one expanding agent in an amount of 15 to 200 phr, and at least one filler in an amount of 5 to 600 phr.

Layer A which comprises at least one FEF makes it feasible to install MIP on site, especially when the MIP needs to be cut. Furthermore, due to its flexibility, MIP or layer A can be bend or fold in certain extent, which makes the MIP useful on a flat or non-flat substrate.

Suitable examples of FEF are those described in, for example, EP 3 372 631 A1, EP 2 450 398 B1, EP 3 006 491 A1, EP 2 261 305 B1, EP 3 165 562 A1.

Preferably, commercially available FEFs, such as those available as AF/Armaflex^{®}, Armaflex Ultima^{®}, NH/Armaflex^{®}, HT/Armaflex^{®}, etc. may be used in or as layer A.

### Layer B

The second layer B, which is arranged between layer A and layer C, comprises at least one inorganic fibrous woven or nonwoven material. Layer B mainly determines the mechanical performance of the MIP.

In a preferred embodiment, the fibrous material is a woven fiber. Woven fibers usually have a higher mechanical stability at lower grammage as compared to nonwoven material. This results in a better mechanical performance of the MIP as well as a better fire resistance and lower smoke release. As woven fabrics do not early breakup or crack during the SBI test, layer C is much better protected and shielded from the flame.

The fibers according to the present invention are preferably non-combustible or have low combustibility. Suitable fibers are inorganic fibers, preferred are glass fibers, mineral fibers and ceramic fibers. More preferred fibers are glass fibers due to their good flexibility and mechanical performance at low grammage as well as low costs. In comparison with polymer or metal, glass fiber has a lower thermal conductivity which further prevents the heat penetration through the MIP.

The grammage of layer B is ≤200 g/m², preferably ≤ 100 g/m², more preferably≤50 g/m², most preferably ≤30 g/m².

A grammage of 200 g/m² is the maximum of layer B within the MIP for being sliceable with a knife. A grammage ≤100 g/m² of layer B within the MIP has the benefit of improved bendability compared to higher grammages of layer B. A grammage of ≤50 g/m² of layer B results in a MIP without a negative impact on bendability and sliceability compared to a single layer of an FEF, while tear strength, tear resistance and/or puncture resistance compared to conventional NBR/PVC based FEFs can be significantly improved.

Compared to a multilayer system consisting of layer A and layer C, the tear strength (e.g. measured according to DIN ISO 34-1) and tensile strength (e.g. measured according to DIN EN ISO 1798) of MIP of the present invention can be increased by at least 50%, preferably at least 100% by arranging layer B between layer A and layer C. In addition, the puncture resistance ((determined by Fmax in [N]) e.g. measured according to DIN EN 14477) can also be increased by at least 100%, preferably at least 200%, even if layer A is already penetrated before.

Due to layer B, heat penetration through the MIP is decreased in comparison with a multilayer system consisting of layer A and layer C. Heat is dispersed on a surface of layer B and the net heat creation per surface unit is lower compared with smooth and/or closed surface, such as foil or sheet. This makes layer B a better shield to prevent the heat penetration to layer C in case of fire. In addition, layer B may create a synergistic effect with layer C when MIP is used for thermal insulation at a working temperature below the ambient.

### Layer C

Layer C comprises at least one insulation material. The insulation material comprised in the layer C is selected from the group consisting of elastomeric foams, thermoplastic foams, mineral wool, fabric blankets and any combination thereof, preferably flexible elastomeric foams (FEF), flexible polyethylene foams (PEF) and polyethylene terephthalate (PET) foams. Preferably, the insulation material is in the form of FEF.

In one embodiment, layer C comprises at least one layer of FEF.

In another embodiment, the FEF comprised in layer C may be identical to the FEF comprised in layer A.

In a further embodiment, the FEF comprised in layer C may be different from the FEF comprised in layer A.

In one embodiment, layer C may comprise a fabric blanket made from silica fabrics, glass fiber fabrics, ceramic fiber fabrics, silicone or PTFE coated glass fiber fabrics, aluminized fabrics, cellulose fiber fabrics and the combination thereof. In addition, such layer C may comprise hollow or highly porous fillers such as glass bubbles, ceramic bubbles, and/or aerogel particles embedded into the fabric blanket to further reduce its thermal conductivity. In one embodiment, layer C may comprise mineral wool made from rock, blast furnace slag, and other raw materials which are melted and spun into fibers to resemble the texture of wool. For example, the mineral wool may be alumino silicate wool, Kaowool, polycrystalline wool and the combination thereof. In addition, such layer C may comprise hollow or highly porous fillers such as glass bubbles, ceramic bubbles, and/or aerogel particles embedded into the wool to further reduce its thermal conductivity.

In one embodiment, layer C may comprise at least one polymer selected from, but not limited to ethylene propylene diene methylene elastomer (EPDM), chloroprene rubber (CR), chlorosulfonated polyethylene (CSM), styrene-butadiene rubber (SBR), nitrile butadiene rubber (NBR), polyvinyl chloride (PVC), chlorinated polyethylene (CPE or CM), bromobutyl rubber (BIIR), chlorobutyl rubber (CIIR), ACM/AEM (acrylic elastomers), AU/EU (polyurethanes), BR (butadiene rubber), (G)(E)CO (epichlorohydrin elastomers), EVM (ethylene/vinylacetate copolymers), (H)NBR ((hydrogenated) nitrile butadiene rubber), FKM/F(E)PM (fluoroelastomers), GPO (propylene oxide rubber), IR (isoprene rubber), IIR (isobutylene isoprene rubber), (V)MQ (silicone rubber), NR (natural rubber), T (polysulfide rubber), PE (polyethylene), PP (polypropylene), PET (polyethylene terephthalate), PBT (polybutylene terephthalate), PC (polycarbonate), PS (polystyrene), PA (polyamide), PU (polyurethane), PTFE (polytetrafluoroethylene), PMMA (polymethyl methacrylate) and the like or any combination thereof.

In case the layer C is a FEF, the flexible elastomeric foam may be crosslinked or not crosslinked. The crosslinked flexible elastomer foam may comprise at least one crosslinking system comprising peroxides, silane coupling agent, radiation activators (for radiation or UV curing), sulphur compounds, bisphenolics, metal oxides or a combination thereof.

The flexible elastomer foam may be expanded by at least one expansion agent which produces a uniform and fine cell structure in an elastomer. Suitable expansion agents may be chosen from chemical expansion agents which release carbon dioxide, nitrogen or water by the influence of heat and/or physical expansion agents such as CO₂, N₂, inert gas or a combination thereof.

Layer C may further comprise a heat and/or reversion stabilizer system chosen from the classes of carbon blacks, metal oxides and hydroxides, metal organic complexes, radical scavengers, complex silicate and combinations thereof.

Layer C may further comprise a fire retardant system. Fire retardant systems may comprise chemicals chosen from inorganic fire retardants such as halogenated compounds, phosphorus compound, metallic oxides, metallic carbonates, metallic hydroxides and the like, organic fire retardants such as chlorinated paraffins, brominated aromatics and chloroalicyclics and any combination thereof, and/or comprise a polymeric flame retardant which has a halogen, preferably a bromine content of at least 50 wt%. Suitable examples of fire retardants are antimony trioxide, antimony pentoxide, alumina trihydrate, magnesium hydroxide, zinc borate, zinc stannate, zinc hydroxystannate, calcium carbonate, magnesium carbonate, tin oxide, zinc hydroxystannate, zinc molybdate, molybdenum oxide, ammonium octamolybdate, stannous oxide, tungsten oxide, bismuth oxide, bismuth oxychloride, arsenic trioxide, arsenic pentoxide, vanadium oxide, zirconium oxide, phosphate esters, ammonium polyphosphate, clay, talc, silica, carbon black, chlorinated paraffins, decabromodiphenyl oxide, ethylene bis(tetrabromophthalimide), brominated epoxy polymer, brominated polyphenyl ether and the like.

In order to achieve the targeted SBI classification for layer C, it is understood that the above list of flame retardants is only illustrative and the flame retardants may be used in combination or used interchangeably. The fire retardants are added in FEF in an amount which is known in the art. The fire retardants can be added in an amount such as that disclosed in EP 3 372 631 A1, EP 2 450 398 B1, EP 3 006 491 A1, EP 2 261 305 B1, EP 3 165 562 A1 and Dick, John S., ed. Chapter 22 of Rubber technology: compounding and testing for performance. Carl Hanser Verlag GmbH Co KG, 2014.

Layer C may further comprise at least one inorganic filler, preferably of metal and/or half metal chalcogen (i.e. compound of oxygen, sulphur) nature. The inorganic filler may be an aluminium compound, such as aluminium silicates, oxides, hydroxides etc. like ATH (aluminium hydroxide), a silicon based compound, such as silicates, quartz, zeolites etc., and/or mineral based fillers such as gypsum, clay, huntite, hydromagnesite, perlite, vermiculite, chalk, slate, graphite, talc/mica etc., or any mixtures thereof.

Layer C may further comprise plasticizers such as halogenated paraffins, phosphate plasticizer, phthalates, compounds derived therefrom and any combination thereof.

Layer C may further comprise additives such as biocides, stabilizers (e.g. versus UV, ozone, reversion etc.), pigment, antioxidant, processing aids etc., including additives for improving its manufacturing, application and performance, such as inhibitors, retarders, accelerators, etc..

Layer C primarily serves to set the required insulation properties of the MIP of the present invention, in particular thermal conductivity and WVT.

Layer C has a thermal conductivity of ≤0.0400 W/(m·K), preferably ≤0.0350 W/(m·K), more preferred ≤0.0330 W/(m·K) at 0 °C according to DIN EN 12667 when measured as a sheet or DIN EN ISO 8497 when measured as a tube.

Layer C preferably has a water vapor transmission (WVT) value of ≥2000, preferably ≥5000, more preferably ≥ 7000 according to DIN EN 12086 when measured as a sheet or DIN EN 13469 when measured as a tube.

High WVT values are, inter alia, caused by a high share of closed cells, determined by vacuum water absorption of preferably <5.0%, more preferably <2.5% according to ASTM D 1056.

According to ISO 845, layer C preferably has a density of less than 100 kg/m³, more preferably less than 80 kg/m³, most preferred less than 60 kg/m³. Layer C having a lower density reduces the cost of installation and transportation of MIP.

Preferably, the fire performance of layer C is classified at least E-class according to SBI Test. According to EN 11925-2, the specimen is subjected to direct impingement of a small flame. A specimen of 250 mm × 90 mm is contacted directly with a propane gas flame with a height of 20 mm for 30 s. The flame spread (Fs) of layer C within 60 s after removal of the flame is ≤ 150 mm.

Layer C preferably has a total smoke production (TSP₆₀₀ₛ) of ≤400 m², more preferably ≤200 m², further preferred ≤100 m² according to EN 13823 when measured as a sheet or ≤ 3200 m², ≤ 1600 m², more preferably ≤ 500 m², most preferably ≤ 320 m² according to EN 13823 when measured as a tube.

The total smoke production (TSP₆₀₀ₛ) of layer C according to EN 13823 may be 200% of the maximum allowable value for the targeted SBI classification (according to EN 13823) of the complete MIP.

For example, for an s2 classification of MIP sheets, layer C may have a TSP₆₀₀ₛ ≤400 m² according to EN 13823 when measured as a sheet; for an s1 classification of MIP sheets, the TSP₆₀₀ₛ of layer C may be ≤ 100 m² according to EN 13823 when measured as a sheet; for an s2 classification of MIP tubes, the TSP₆₀₀ₛ of layer C may be ≤3200 m² according to EN 13823 when measured as a tube; for an s1 classification of MIP tubes ≤500 m² according to EN 13823 when measured as a tube.

The afore-mentioned SBI results are preferably achieved at all applied thicknesses of layer C. Indeed, the afore-said TSP₆₀₀ₛ values are achieved by a number of FEF foams (e.g. AF/Armaflex^{®}).

The thickness of layer C is at least equal to or greater than the thickness of layer A, otherwise the insulation properties (especially thermal conductivity and WVT) of the MIP are not sufficiently improved.

In one preferred embodiment, the thickness of layer C is at least double the thickness of layer A, due to the fact that such ratio ensures a strong dominance of the insulation properties of layer C, referred to the MIP.

The multilayer insulation product may furthermore comprise one or more further layer(s). The further layer(s) may, for example, be applied underneath of layer C or on the top of layer A. The further layer may be a further protective layer or a decorative layer.

Layer B is connected to layer A and C by one or more adhesives. Examples of suitable adhesive(s) are two-component adhesive, pressure sensitive adhesive (PSA), hot melt or solvent based contact adhesive or any combination thereof. Preferred adhesives are pressure sensitive adhesive (PSA) and solvent based contact adhesives like polychloroprene contact adhesives. Examples of the suitable adhesive can be those commercially available adhesives such as Armaflex^{®} 520, Armaflex SF990, Armaflex RS850, etc..

Due to the structure of layer B, the adhesive(s) can possibly pass through (e.g. pores in the woven material). Therefore, layer A and layer C are possibly - at least partially - connected to each other directly via the adhesive(s).

In one embodiment, layer B can be impregnated into an adhesive prior to the combination with layer A and/or layer C.

In one embodiment, the combination of layers A and B or the combination of layers B and C are first made as a direct composite A+B or B+C, e.g. by co-extrusion or co-molding. Layer C or layer A is further applied on the composite by an adhesive to form the MIP of present invention.

In one embodiment, the present invention is further directed to a process of producing the multilayer insulation product, which comprises the steps of:
(a) applying layer B onto layer C,
(b) applying layer A onto layer B
to form the multilayer insulation product.

In a variant of this embodiment, layer B is impregnated with an adhesive prior to step (a).

In one embodiment, the process of producing the multilayer insulation product of the present invention comprises the steps of:
(a) coating an adhesive on layer C;
(b) applying layer B onto the adhesive surface of layer C;
(c) coating layer A with the adhesive;
(d) applying layer A onto the surface of layer B.

In another embodiment, a process of producing the multilayer insulation product comprising a step of applying a combination of layer A and B onto layer C. In a variant of this embodiment, layer A is applied on layer B prior to the step of applying layer B onto layer C.

The techniques for applying an adhesive is well-known, such as by adhesive roll, air or airless spraying, brushing, heating the adhesive above its melt temperature, etc..

The SBI classification of the MIP is comparable to the SBI classification of layer A, tested according to EN 13823. Specifically, MIP has a SBI classification of at least C- s2, d0 according to EN 13823 (SBI test) when MIP is measured as a sheet or C_{L}-s2, d0 according to EN 13823(SBI test) when layer A is measured as a tube.

In one embodiment, the fire growth rate (FIGRA), the total heat release (THR₆₀₀ₛ), the smoke growth rate (SMOGRA) and the total smoke production (TSP₆₀₀ₛ) of MIP are comparable to that of layer A.

Preferably, the MIP has a thermal conductivity of ≤ 0.0400 W/(m·K), preferably 0.0350 W/(m·K), especially preferred ≤0.0330 W/(m·K) at 0 °C according to DIN EN 12667 when measured as a sheet or DIN EN ISO 8497 when measured as a tube.

Moreover, the MIP has preferably a WVT of ≥2000, more preferably ≥5000, most preferred ≥7000 according to DIN EN 12086 when measured as a sheet or DIN EN 13469 when measured as a tube.

Preferably, the MIP has a tear strength according to DIN ISO 34-1 which is at least 50%, more preferably at least 100% above the tear strength which is achieved by an otherwise identical multilayer system but in absence of layer B.

Preferably, the MIP has a tensile strength according to DIN EN ISO 1798 which is at least 50%, more preferably at least 100% above the tensile strength which is achieved by an otherwise identical multilayer system but in absence of layer B.

Preferably, the puncture resistance of the MIP, determined by Fmax in [N] according to DIN EN 14477, is at least 100%, more preferably at least 200% above the puncture resistance which is achieved by an otherwise identical multilayer system but in absence of layer B.

According to some embodiments of the present invention, the MIP is used for insulating a substrate. The substrate can generally be any kind of material. Suitable materials comprise, but are not limited to woods, plastic, rubber, resin, metal, glass, concrete or any combination thereof. Substrates suitable to be protected by the MIP according to the invention may have flat, curved, conical or cylindrical surface or a combination thereof.

In one embodiment, the substrate is selected from a group consisting of wall, floor, ceiling, furniture, pipe and tank.

In an embodiment, the MIP of the present invention may be used for insulation of installations at a working temperature below ambient, such as chilling plates, refrigeration pipes, etc..

The way of connecting the MIP of the present invention to the substrate is well-known for the skilled person. The MIP may be directly connected to the substrate by, for example, an adhesive. Alternatively, the MIP may be indirectly connected to the substrate by, for example, at least one fastener such as a bolt, staple, rivet, wire, adhesive, screw, nail or combinations thereof.

In an embodiment, a product comprising the layer A defined above is used to produce the MIP of the present invention. An advantage of the MIP of the present invention is the versatility of fire protection and - in particular - smoke suppression. By placing functional layer B in between the insulation layers A and C, the drawbacks of current solutions can be overcome. In comparison, current multilayer solutions (e.g. as disclosed in EP 2 345 535 A1 and EP 2 942 193 A1) require at least two functional layers. When a combination of glass fiber fabric and aluminum foil (see EP 2 345 535 A1) is placed in the MIP as layer B, total smoke release (TSP₆₀₀ₛ) during SBI test increases significantly.

Surprisingly, flame resistance is not changed compared to the use of a single layer of glass fiber fabric in layer B. Unlike such layers are applied to stop or extremely slow down the migration of combustible gases, such gases need to pass layer B of the MIP in the present invention. The burning is slowed down with moderate oxygen supply. In addition to the controlled burning of combustible gases, due to the low thermal conductivity, layer B also disperses the flame over the surface and slows down heat penetration into layer C.

Another advantage of the MIP of the present invention is the separation of targeted properties into three different layers A, B and C. Layer A significantly influences the burning behavior and optical appearance of the MIP of the present invention. Layer B significantly influences the mechanical properties like tear strength, tear resistance and puncture resistance and disperses heat to protect layer C from the flame. Layer C significantly influences the insulation properties such as thermal conductivity and WVT of the MIP. In addition, it is sufficient that the TSP₆₀₀ₛ of layer C is ≤ 200% of the targeted TSP₆₀₀ₛ value of the MIP. The specific combination of the layers in the MIP of the present invention is able to combine or even synergistically increase the advantages of layers A, B and C while at the same time reducing, or even eliminating, the drawbacks of the individual layers.

A further advantage of the MIP of the present invention is the principal applicability for sheets as well as tubes. Unlike prior art multilayer products, which can only be applied to sheets due to the chimney effect caused by diffusion resistant functional layers, layer B of the MIP of the present invention is preferably designed to be permeable. Furthermore, due to a suitable flexibility of layer B, the application to (almost) any bending radius and therefore (almost) any tube dimension is feasible without, or with only negligible, material stress caused by layer B.

The MIP of the present invention comprising layers A, B, and C may be installed on the substrate in one step. Alternatively, it is possible to apply layer A or layers A and B in a further step on the substrate, e.g. as a self-adhesive layer, to improve the fire performance even several month or years after insulation layer C was installed on the substrate. This can result in significant cost savings and environmental benefits, as it avoids complete new installations and disposal of insulation material already present on the substrate. Due to the fact that layer A comprises at least one FEF, a partly application is also possible without causing different optical appearance of the whole installation afterwards.

Moreover, in some embodiments, the MIP according to the present invention is excellent in flexibility, cuttability and bendability with low density leading to fast and easy applicability during installation. This makes it possible to apply the MIP of the present invention on a substrate of various surface forms. For example, the MIP of the present invention may be applied on a flat, curved, conical or cylindrical substrate or thereof.

A further advantage of layer A of the present invention is the ability to compensate small wrinkles that can occur within the MIP due to the limited elasticity and especially compressibility of layer B. Surprisingly, the results of a three point bending test showed that less force is required to bend the MIP of the present invention compared to layers A and C solely at a thickness equal to the complete MIP.

Another advantage is the fact that the desired SBI performance of the MIP of the present invention is achievable by selecting a layer A fulfilling the desired SBI performance. While total insulation thicknesses of 19 mm, 25 mm or even above are required by the market and need to fulfill the SBI performance over the entire thickness range, it is sufficient for the MIP of the present invention to achieve such results with a thickness of at least 2 mm, preferably at least 5 mm of layer A. This fact allows the achievement of improved SBI classifications e.g. for halogen free insulation materials (in particular FEFs) or high temperature insulation materials based EPDM rubber, which currently achieve only a D or E-class according EN 13823 (e.g. NH/Armaflex^{®}, HT/Armaflex^{®}). Furthermore, insulation properties etc. of such products can be improved without worsening the fire performance. This can be achieved by applying the FEF material as layer A and modifying such FEF for layer C in a way that e.g. fire performance is worsened but WVT is improved. Such freedom of design allows a significantly improved full package of different or even contrary properties of the claimed MIP compared to a single layer of FEF.

Due to the fact that layer C does not have to be highly flame retardant, significantly lower total amounts of flame retardants, especially chlorinated or brominated ones, are required in the MIP. Even halogen-free FEFs can achieve a significantly improved fire resistance and reduced smoke development in the MIP of the present invention.

A further advantage of MIP of the present invention is that it is possible to choose FEF which is economic and ecologic. In an embodiment, the MIP of the present invention may contain a high amount of scrapped or recycled material of the same or other kind in layer A and/or layer C without worsen the fire-resistant property and its mechanical property.

The MIP of the present invention may further be used for thermal and sound/vibration insulation application within a wide range of working temperatures. A sufficient water vapor transmission value of layer C makes the MIP additionally useful in insulation of installations at working temperatures below ambient, such as chilled water and refrigeration pipes, because the object to be insulated is well protected from under insulation corrosion (UIC) through condensation of humidity.

Another advantage is the improvement of mechanical properties such as tear strength, tear resistance and puncture resistance by layer B, although the optical appearance of the claimed MIP is equal to a single FEF layer. Even if layer A should be damaged after or during installation, layer B acts as a barrier against damage and protects layer C. Due to the fact that the insulation properties are predominantly determined by layer C, insulation properties do not worsen due to such damage. The fire performance of the MIP may, however, be affected if significant parts of layer A are removed. Damage, even if they reach layer B, e.g. by punctures, cuts, etc., should not significantly impact the SBI results of the MIP of the present invention, as long as the integrity of layer B is given. Furthermore, such damage cannot tear up any further into layer C. Therefore, additional covering(s) applied as protective layer(s) against mechanical damage, like aluminum or polymeric claddings, are not necessary - but still possible.

Moreover, the risk of cracks within an installation is dramatically reduced. Due to such risk, which is growing with increasing wall thicknesses and narrowing bending radius, conventional prior art FEF foams need to be applied with a sufficient amount of cuttings, especially in pipe elbows etc.. Otherwise, the tension - caused by elongation - within the material can cause cracks, requiring a replacement of the installed FEF. Due to layer B within the MIP of the present invention, which preferably is hardly stretchable, only layer A is elongated and layer C is compressed. Within a conventional prior art FEF insulation layer, the change from elongation to compression occurs approximately in the middle of such layer. As layer C of the MIP has a thickness greater than layer A, such change from elongation to compression is moved to the position of layer B in less elongation and tension at the outermost skin of the claimed MIP. This results in significantly reduced risk of surface cracks in layer A.

Additional aspects, advantages, features and details of the various aspects of the present invention are described in the following examples, but the present invention is not limited to these examples.

### EXAMPLES

The following examples are not intended to limit the scope of the present invention and are provided for illustrative purposes only.

The following examples and comparative examples were prepared and tested using materials acquired from the market or produced according to the state of the art to samples of required thicknesses. Table 1 gives an overview about the tested comparative and innovative examples.

### Raw materials

In the following examples and comparative examples, the required foams were acquired on the market or being produced according to state of the art procedures.

**Table 1**

| Material | Supplier |
|---|---|
| AF/Armaflex^{®}, NBR/PVC based | Armacell GmbH, Münster, Germany |
| Armaflex Ultima^{®}, CR based | Annacell GmbH, Münster, Germany |
| NH/Armaflex^{®}, NBR based | Armacell GmbH, Münster, Germany |
| NBR/PVC | Armacell GmbH, Münster, Germany |
| SBR/PVC | Armacell GmbH, Münster, Germany |
| Woven glass fibers | P-D Interglas Technologies GmbH, Erbach, Germany |
| Nonwoven glass fibers | Polyvlies GmbH, Hörstel, Germany |
| Aluminum foil | Alujet GmbH, Mammendorf, Germany |
| Woven vulcano fibers | Isomatex S.A., Gembloux (Isnes), Belgium |
| Melamine Non-woven fibers | smartMELAMINE, Kočevje, Slovenia |

### Examples

Layer A, layer B, and layer C were connected using either solvent based contact adhesive (Armaflex^{®} 520, Armacell GmbH, Germany) to obtain different multilayer samples shown in Table 2.

In the single burning item test, single Armaflex Ultima^{®} foam sheets are classified to B-s2 d0 with FIGRA of 111 W/s, THR₆₀₀ₛ of 1.8 MJ, SMOGRA of 123 m²/s² and TSP₆₀₀ₛ of 84 m². AF/Armaflex^{®} FOAM sheets are classified to B-s3 d0 with FIGRA of 69 W/s, THR₆₀₀ₛ of 1.4 MJ, SMOGRA of 1887 m²/s² and TSP₆₀₀ₛ of 289 m².

**Table 2**

| Examples | Layer A | Layer B | Layer C |
|---|---|---|---|
| Ex. 1 | 5mm Armaflex Ultima^{®} | Glass Fiber Woven 180 g/m² | 20 mm AF/Armaflex^{®} |
| Ex. 2 | 6 mm Armaflex Ultima^{®} | Glass Fiber Woven 180 g/m² | 19mm AF/Armaflex^{®} |
| Ex. 3 | 6 mm Armaflex Ultima^{®} | Glass Fiber Woven 25 g/m² | 19 mm AF/Armaflex^{®} |
| Ex. 4 | 5 mm Armaflex Ultima^{®} | Glass Fiber Woven 25 g/m² | 20 mm AF/Armaflex^{®} |
| Ex. 5 | 2 mm Armaflex Ultima^{®} | Glass Fiber Woven 25 g/m² | 23 mm AF/Armaflex^{®} |
| Ex. 6 | 5 mm Armaflex Ultima^{®} | Glass Fiber Woven 25 g/m² | 20 mm NBR/PVC |
| Ex. 7 | 2 mm Armaflex Ultima^{®} | Glass Fiber Woven 25 g/m² | 23 mm Armaflex Ultima^{®} |
| Ex. 8 | 13 mm Armaflex Ultima^{®} | Glass Fiber Nonwoven 45 g/m² | 13mm AF/Armaflex^{®} |
| Ex. 9 | 3 mm Armaflex Ultima^{®} | Glass Fiber Non-woven 45g/m² | 19 mm AF/Armaflex^{®} |
| Ex. 10 | 6 mm Armaflex Ultima^{®} | Glass Fiber Non-woven 45g/m² | 19 mm AF/Armaflex^{®} |
| Ex. 11 | 3 mm NH/Armaflex^{®} | Glass Fiber Woven 25 g/m² | 22mm NH/Armaflex^{®} |
| Com. Ex. 1 | 25 mm Armaflex Ultima^{®} | | |
| Com. Ex. 2 | 2 mm Armaflex Ultima^{®} | | |
| Com. Ex. 3 | 5 mm Armaflex Ultima^{®} | | |
| Com. Ex. 4 | 25 mm AF/Armaflex^{®} | | |
| Com. Ex. 5 | 25mm NH/Armaflex^{®} | | |
| Com. Ex. 6 | 3 mm NH/Armaflex^{®} | | |
| Com. Ex. 7 | 20mm NBR/PVC | | |
| Com. Ex. 8 | 20 mm SBR/PVC | | |
| Com. Ex. 9 | 5 mm Armaflex Ultima^{®} | Glass Fiber Woven 180 g/m² + 20µm Aluminium | 20 mm AF/Armaflex^{®} |
| Com. Ex. 10 | 5 mm Armaflex Ultima^{®} | Glass Fiber Woven 25 g/m² + 20µm Aluminium | 20 mm AF/Armaflex^{®} |
| Com. Ex. 11 | 6 mm Armaflex Ultima^{®} | Glass Fiber -Aluminium-LDPE 86 g/m² (LDPE 20 g/m²) | 19 mm AF/Armaflex^{®} |
| Com. Ex. 12 | 6 mm Armaflex Ultima^{®} | Aluminium foil 90g/m² | 19 mm AF/Armaflex^{®} |
| Com. Ex. 13 | 6 mm Armaflex Ultima^{®} | Woven Vulcano Fiber 210 g/m² | 19 mm AF/Armaflex^{®} |
| Com. Ex. 14 | 6mm Armaflex Ultima^{®} | Glass Fiber - Aluminium foil 240 g/m² | 19mm AF/Armaflex^{®} |
| Com. Ex. 15 | 6mm Armaflex Ultima^{®} | Melamine Non-woven 30 g/m² | 19mm AF/Armaflex^{®} |
| Com. Ex. 16 | 5mm Armaflex Ultima^{®} | Glass Fiber Woven 25 g/m² | 20 mm SBR/PVC |
| Com. Ex.17 | 19 mm AF/Armaflex^{®} | Glass Fiber non-woven 45g/m² | |

### Test Example 1: SBI test

The fire resistance and smoke production of the samples were determined according to EN 13823 (SBI test). Specimen were tested in form of sheets. Table 3 shows the results of the SBI test.

**Table 3**

| Examples | FIGRA (W/s) | THR₆₀₀ₛ (MJ) | SMOGRA (m²/s²) | TSP₆₀₀ₛ (m²) | SBI |
|---|---|---|---|---|---|
| Ex. 1 | | | | 178 | B s2 d0 |
| Ex. 2 | 65 | 1.8 | 148 | 198 | B s2 d0 |
| Ex. 3 | 66 | 1.8 | 141 | 195 | B s2 d0 |
| Ex. 4 | | | | 172 | B s2 d0 |
| Ex. 5 | | | | 193 | B s2 d0 |
| Ex. 6 | | | | 138 | B s2 d0 |
| Ex. 7 | | | | 54 | B s2 d0 |
| Ex. 8 | 70 | 2.3 | 166 | 180 | B s2 d0 |
| Ex. 10 | 69 | 2.0 | 168 | 297 | B s3 d0 |
| Ex. 11 | | | | 188 | C s2 d0 |
| Com. Ex. 1 | | | | 96 | B s2 d0 |
| Com. Ex. 2 | | | | 48 | B s2 d0 |
| Com. Ex. 3 | | | | 60 | B s2 d0 |
| Com. Ex. 4 | | | | 350 | B s3 d0 |
| Com. Ex. 5 | | | | 220 | D s3 d0 |
| Com. Ex. 6 | | | | 140 | C s2 d0 |
| Com. Ex. 7 | | | | 163 | D s2 d0 |
| Com. Ex. 8 | | | | 480 | C s3 d0 |
| Com. Ex. 9 | | | | 286 | B s3 d0 |
| Com. Ex. 10 | | | | 281 | B s3 d0 |
| Com. Ex. 11 | 264 | 3.0 | 414 | >360 | D s3 d0 |
| Com. Ex. 12 | 67 | 2.1 | 128 | 360 | B s3 d0 |
| Com. Ex. 13 | 64 | 2.0 | 147 | 281 | B s3 d0 |
| Com. Ex. 14 | 63 | 1.8 | 158 | 286 | B s3 d0 |
| Com. Ex. 15 | 60 | 2.2 | 151 | 347 | B s3 d0 |
| Com. Ex. 16 | | | | 240 | B s3 d0 |

According to the SBI test, B-classification refers to FIGRA≤120 W/s and THR₆₀₀ₛ ≤7.5 MJ, C-classification refers to FIGRA ≤ 250 W/s and THR₆₀₀ₛ ≤ 15.0 MJ, D-classification refers to FIGRA ≤ 750 W/s. For smoke production, s1 classification refers to SMOGRA≤30 m²/s² and TSP₆₀₀ₛ≤50 m², s2-classification refers to SMOGRA ≤180 m²/s² and TSP₆₀₀ₛ≤200 m² and s3-classification refers to not s1 and s2.

As can be seen from the SBI test, an additional impermeable layer, for example an aluminum foil (Com. Ex. 9, 10, 11 and 14) worsens smoke development, resulting in worse classification of smoke production.

In addition, Com. Ex 8 and Com. Ex 16 show that layer C with the TSP₆₀₀ₛ above 200% of the limit of s2-classification results in a s3-classification of the MIP.

### Test Example 2: Thermal conductivity

Thermal conductivity was determined according to DIN EN 12667 and the results are shown in Table 4.

**Table 4**

| Examples | Thermal conductivity at 0 °C (mW/(m·K)) |
|---|---|
| Ex. 1 | 32.4 |
| Ex. 3 | 32.5 |
| Ex. 4 | 32.5 |
| Ex. 5 | 32.2 |
| Ex. 6 | 32.6 |
| Ex. 7 | 38.2 |
| Ex. 11 | 39.2 |
| Com. Ex. 1 | 38.3 |
| Com. Ex. 4 | 31.7 |
| Com. Ex. 5 | 39.1 |
| Com. Ex. 7 | 32.1 |
| Com. Ex. 8 | 32.7 |
| Com. Ex. 9 | 32.5 |
| Com. Ex. 10 | 32.7 |
| Com. Ex. 16 | 33.9 |

The results of thermal conductivity show that the layer C with a higher thermal conductivity results in a high thermal conductivity of MIP.

### Test Example 3: Water vapor transmission resistance

Water vapor transmission resistance was determined according to DIN EN 12086 and the results are shown in Table 5.

**Table 5**

| Examples | WVT |
|---|---|
| Ex. 1 | 11800 |
| Ex. 2 | 8602 |
| Ex. 3 | 13645 |
| Ex. 4 | 11900 |
| Ex. 5 | 12300 |
| Ex. 6 | 12000 |
| Ex. 7 | 8800 |
| Ex. 10 | 10379 |
| Ex. 11 | 3100 |
| Com. Ex. 1 | 8600 |
| Com. Ex. 4 | 12200 |
| Com. Ex. 5 | 2500 |
| Com. Ex. 7 | 12400 |
| Com. Ex. 8 | 6900 |
| Com. Ex. 9 | 72800 |
| Com. Ex. 10 | 58700 |
| Com. Ex. 11 | 51269 |
| Com. Ex. 12 | 63818 |
| Com. Ex. 14 | 76187 |
| Com. Ex. 15 | 16428 |
| Com. Ex. 16 | 7500 |

### Test Example 4: Flexibility

Flexural strength was determined by a 3-points bending test according to ISO 1209-2. The flexural strength in terms of bending force at a deflection of 20 mm and 30 mm, F(b20) and F(b30), as well as the E-module are taken as characteristic properties to quantify the flexibility of samples. The results are shown in Table 6.

**Table 6**

| Examples | F(b20) (N) | F(b30) (N) | E-module (N/mm) |
|---|---|---|---|
| Ex. 2 | 1.85 | 2.35 | 0.15 |
| Ex. 3 | 1.58 | 2.22 | 0.13 |
| Ex. 8 | 1.83 | 2.62 | 0.15 |
| Ex. 9 | 2.26 | 2.96 | 0.41 |
| Ex. 10 | 1.68 | 2.20 | 0.14 |
| Com. Ex. 11 | 1.67 | 2.21 | 0.16 |
| Com. Ex. 12 | 2.57 | 3.38 | 0.20 |
| Com. Ex. 14 | 2.57 | 3.38 | 0.20 |
| Com. Ex.17 | 2.39 | 3.19 | 0.32 |

### Test Example 5: Tensile Strength and Tear Strength

Table 7 shows the comparative data of mechanical strength. Tensile strength was determined according to DIN EN ISO 1798. The tensile strengths (kPa) are the maximum measured forces applied at longitudinal directions, which is measured as the material sample breaks.

Tear strength was determined according to DIN ISO 34-1. It is noted that the MIPs with a layer B have a significantly increased tensile strength and tear strength.

It should be pointed out that Ex. 12 and Ex. 13 have a different breaking behavior from Com. Ex. 18. Upon braking after tensile test, layer B was damaged first, while the elastomer foams stayed undamaged. However, in Com. Ex.18, in which layer B is absent, damage always occurs directly on the elastomer foam.

**Table 7**

| Example | Layer A | Layer B | Layer C | Tensile strength (kPa) | Reinforcement (%) | Tear strength (kW/m) | Reinforcement (%) |
|---|---|---|---|---|---|---|---|
| Com. Ex 18 | 6 mm Armaflex Ultima^{®} | | 6mm AF/Armaflex^{®} | 151.43 | --- | 0.53 | --- |
| Ex. 12 | 6 mm Armaflex Ultima^{®} | GF Non-woven 45 g/m² | 6mm AF/Armaflex^{®} | 338.82 | 124% | 1.02 | 92 |
| Ex. 13 | 6mm Armaflex Ultima^{®} | GF Woven 25 g/m2 | 6 mm AF/Armaflex^{®} | 475.77 | 214% | 1.17 | 121 |

It will be appreciated by those skilled in the art that changes could be made to the embodiments described above without departing from the inventive concept thereof. It is understood, therefore, that the invention is not limited to the particular examples and embodiments disclosed above.

### INDUSTRIAL APPLICABILITY

According to the above aspects of the present invention, it is for example possible to provide a multilayer insulation product having high flame resistance and low smoke production, being applicable for tubes and sheets, having a thermal conductivity, WVT, flexibility and optical comparable to conventional NBR/PVC based FEFs and improved the mechanical. Accordingly, the present invention has significant industrial applicability.

## Claims

1. A multilayer insulation product (MIP) comprising at least three layers A, B and C, wherein
- layer A is an outer layer comprising at least one flexible elastomeric foam (FEF), wherein layer A
(a1) has a thickness of at least 2 mm,
(a2) has a thermal conductivity of ≤ 0.0500 W/m·K at 0 °C according to DIN EN 12667 when measured as a sheet or DIN EN ISO 8497 when measured as a tube, and
(a3) has a fire growth rate (FIGRA) value ≤ 250 W/s, a total heat release (THR₆₀₀ₛ) ≤ 15.0 MJ, a smoke growth rate (SMOGRA) ≤ 180 m²/s², and a total smoke production (TSP₆₀₀ₛ) ≤ 200 m² according to EN 13823 when measured as a sheet;
or a fire growth rate (FIGRA) value ≤ 460 W/s, a total heat release (THR₆₀₀ₛ) ≤ 15.0 MJ, a smoke growth rate (SMOGRA) ≤ 580 m²/s², and a total smoke production (TSP₆₀₀ₛ) ≤ 1600 m² according to EN 13823 when measured as a tube;
- layer B is arranged between layer A and layer C, wherein layer B
comprises at least one inorganic fibrous material, in form of woven or nonwoven material, wherein the inorganic fibrous material is selected from glass fiber, mineral fiber, ceramic fiber or any combination thereof,
wherein layer B has a grammage of ≤ 200 g/m²,
wherein the term "woven" refers to any material of fibers, continuous filaments, or chopped yarns of any nature or origin, which have been mechanically assembled in a non-random manner by weaving, knitting, bonding, felting or tufting,
and wherein the term "nonwoven" refers to any material of fibers, continuous filaments, or chopped yarns of any nature or origin, that have been formed into a web by any means, and bonded together by any means, with the exception of weaving or knitting; and
- layer C is an inner layer comprising at least one insulation material,
wherein layer C
(c1) has a thickness equal to or greater than the thickness of layer A, and
(c2) has thermal conductivity of ≤ 0.0400 W/m·K at 0°C according to DIN EN 12667 when measured as a sheet or DIN EN ISO 8497 when measured as a tube.

2. The multilayer insulation product according to claim 1, wherein the inorganic fibrous material is in the form of woven fibrous material.

3. The multilayer insulation product according to claim 1 or 2, wherein the inorganic fibrous material is glass fiber.

4. The multilayer insulation product according to any one of the preceding claims, wherein layer B has a grammage of ≤ 100 g/m², preferably ≤ 50 g/m², more preferably ≤ 30 g/m².

5. The multilayer insulation product according to any one of the preceding claims, wherein layer C has a thickness at least double the thickness of layer A.

6. The multilayer insulation product according to any one of the preceding claims, wherein layer C has a water vapor transmission value of ≥ 2000, preferably ≥ 5000, more preferably ≥ 7000 according to DIN EN 12086 when measured as a sheet or DIN EN 13469 when measured as a tube.

7. The multilayer insulation product according to any one of the preceding claims, wherein layer C has a vacuum water absorption of < 5.0%, preferably < 2.5% according to ASTM D 1056.

8. The multilayer insulation product according to any one of the preceding claims, wherein the insulation material comprised in the layer C is selected from the group consisting of elastomeric foams, thermoplastic foams, mineral wool, fabric blankets and any combination thereof, preferably flexible elastomeric foams (FEF), flexible polyethylene foams (PEF) and polyethylene terephthalate (PET) foams,
more preferably, the insulation material comprised in layer C is in the form of a flexible elastomeric foam.

9. The multilayer insulation product according to any one of the preceding claims, wherein the flexible elastomeric foam comprised in layer A comprises polymer selected from ethylene propylene diene elastomer (EPDM), chloroprene rubber (CR), chlorosulfonated polyethylene (CSM), styrene-butadiene rubber (SBR), nitrile butadiene rubber (NBR), polyvinyl chloride (PVC), chlorinated polyethylene (CPE or CM), bromobutyl rubber (BIIR), chlorobutyl rubber (CIIR) or any combination thereof, preferably chloroprene rubber (CR), chlorosulfonated polyethylene (CSM) and chlorinated polyethylene (CPE or CM).

10. The multilayer insulation product according to any one of the preceding claims, wherein the flexible elastomeric foam comprised in the layer A and the flexible elastomeric foam comprised in the layer C are different or identical to each other, preferably different to each other.

11. The multilayer insulation product according to any one of the preceding claims, wherein layer A, layer B and layer C are connected by an adhesive selected from a group consisting of two-component adhesive, pressure sensitive adhesive, hotmelt or solvent based contact adhesive or any combination thereof,
preferably, the adhesive is a pressure sensitive adhesive or solvent based contact adhesive.

12. The multilayer insulation product according to any one of the preceding claims consisting of layer A, B and C.

13. A process of producing the multilayer insulation product according to any one of the preceding claims comprising a step of:
applying a combination of layers A and B onto layer C,
or
comprising steps of
(a) applying layer B onto layer C, and
(b) applying layer A onto layer B;
to form the multilayer insulation product.

14. The process according to claim 13, wherein layer B is impregnated with an adhesive prior to step (a).

15. Use of the multilayer insulation product according to any one of the preceding claims for insulating a substrate,
preferably, the substrate is selected from a group consisting of wall, floor, ceiling, furniture, pipe and tank.

16. Use of a product comprising layer A as defined in any one of claims 1 to 12 to produce the multilayer insulation product according to any one of claims 1 to 12.

## Patentansprüche

1. Ein mehrschichtiges Isolierungsprodukt (MIP), umfassend mindestens drei Schichten A, B und C, wobei
- Schicht A eine äußere Schicht ist, die mindestens einen flexiblen Elastomerschaum (FEF) umfasst, wobei Schicht A
(a1) eine Dicke von mindestens 2 mm aufweist,
(a2) eine Wärmeleitfähigkeit von ≤ 0,0500 W/m·K bei 0°C gemäß DIN EN 12667 bei Messung als Platte oder DIN EN ISO 8497 bei Messung als Rohr aufweist und
(a3) eine Brandausbreitungsrate (FIGRA)-Wert ≤ 250 W/s, eine Gesamtwärmeabgabe (THR₆₀₀ₛ) ≤ 15,0 MJ, eine Rauchausbreitungsrate (SMOGRA) ≤ 180 m²/s² und eine Gesamtrauchentwicklung (TSP₆₀₀ₛ) ≤ 200 m² gemäß EN 13823 bei Messung als Platte aufweist;
oder eine Brandausbreitungsrate (FIGRA)-Wert ≤ 460 W/s, eine Gesamtwärmeabgabe (THR₆₀₀ₛ) ≤ 15,0 MJ, eine Rauchausbreitungsrate (SMOGRA) ≤ 580 m²/s² und eine Gesamtrauchentwicklung (TSP₆₀₀ₛ) ≤ 1600 m² gemäß EN 13823 bei Messung als Rohr aufweist;
- Schicht B zwischen Schicht A und Schicht C angeordnet ist, wobei Schicht B mindestens ein anorganisches Fasermaterial in Form eines Gewebes oder Vliesstoffs umfasst, wobei das anorganische Fasermaterial aus Glasfaser, Mineralfaser, Keramikfaser oder einer Kombination davon ausgewählt ist,
wobei Schicht B ein Flächengewicht von ≤ 200 g/m² aufweist,
wobei sich der Begriff "Gewebe" auf jedes Material aus Fasern, Endlosfasern, oder geschnittenen Garnen beliebiger Art oder Herkunft, die mechanisch in nicht zufälliger Art und Weise durch Weben, Stricken, Verkleben, Filzen oder Steppen zusammengefügt wurden, bezieht,
und wobei sich der Begriff "Vliesstoff" auf jedes Material aus Fasern, Endlosfasern oder geschnittenen Garnen beliebiger Art oder Herkunft, die auf beliebige Weise zu einer Bahn geformt und auf beliebige Weise, mit Ausnahme von Weben oder Stricken, miteinander verbunden wurden, bezieht; und
- Schicht C eine innere Schicht ist, die mindestens ein Isolierungsmaterial umfasst, wobei Schicht C
(c1) eine Dicke aufweist, die gleich oder größer ist als die Dicke von Schicht A, und
(c2) eine Wärmeleitfähigkeit von ≤ 0,0400 W/m·K bei 0°C gemäß DIN EN 12667 bei Messung als Platte oder DIN EN ISO 8497 bei Messung als Rohr aufweist.

2. Das mehrschichtige Isolierungsprodukt nach Anspruch 1, wobei das anorganische Fasermaterial in Form eines gewebten Fasermaterials vorliegt.

3. Das mehrschichtige Isolierungsprodukt nach Anspruch 1 oder 2, wobei das anorganische Fasermaterial Glasfaser ist.

4. Das mehrschichtige Isolierungsprodukt nach einem der vorhergehenden Ansprüche, wobei Schicht B ein Flächengewicht von ≤ 100 g/m², vorzugsweise ≤ 50 g/m², stärker bevorzugt ≤ 30 g/m² aufweist.

5. Das mehrschichtige Isolierungsprodukt nach einem der vorhergehenden Ansprüche, wobei Schicht C eine Dicke aufweist, die mindestens das Doppelte der Dicke von Schicht A beträgt.

6. Das mehrschichtige Isolierungsprodukt nach einem der vorhergehenden Ansprüche, wobei Schicht C einen Wasserdampfdurchlässigkeitswert von ≥ 2000, vorzugsweise ≥ 5000, stärker bevorzugt ≥ 7000 gemäß DIN EN 12086 bei Messung als Platte oder DIN EN 13469 bei Messung als Rohr aufweist.

7. Das mehrschichtige Isolierungsprodukt nach einem der vorhergehenden Ansprüche, wobei Schicht C eine Vakuum-Wasseraufnahme von < 5,0%, vorzugsweise < 2,5%, gemäß ASTM D 1056 aufweist.

8. Das mehrschichtige Isolierungsprodukt nach einem der vorhergehenden Ansprüche, wobei das in der Schicht C umfasste Isolierungsmaterial ausgewählt ist aus der Gruppe bestehend aus Elastomerschäumen, thermoplastischen Schäumen, Mineralwolle, Gewebematten und einer Kombination davon, vorzugsweise flexiblen Elastomerschäumen (FEF), flexiblen Polyethylenschäumen (PEF) und Polyethylenterephthalat (PET)-Schäumen,
stärker bevorzugt liegt das in Schicht C umfasste Isolierungsmaterial in Form eines flexiblen Elastomerschaums vor.

9. Das mehrschichtige Isolierungsprodukt nach einem der vorhergehenden Ansprüche, wobei der in Schicht A umfasste flexible Elastomerschaum Polymer, ausgewählt aus Ethylen-Propylen-Dien-Elastomer (EPDM), Chloropren-Kautschuk (CR), chlorsulfoniertem Polyethylen (CSM), Styrol-Butadien-Kautschuk (SBR), Nitril-Butadien-Kautschuk (NBR), Polyvinylchlorid (PVC), chloriertem Polyethylen (CPE oder CM), Brombutylkautschuk (BIIR), Chlorbutylkautschuk (CIIR) oder einer Kombination davon, vorzugsweise Chloroprenkautschuk (CR), chlorsulfoniertem Polyethylen (CSM) und chloriertem Polyethylen (CPE oder CM), umfasst.

10. Das mehrschichtige Isolierungsprodukt nach einem der vorhergehenden Ansprüche, wobei der in der Schicht A umfasste flexible Elastomerschaum und der in der Schicht C umfasste flexible Elastomerschaum voneinander verschieden oder identisch, vorzugsweise voneinander verschieden, sind.

11. Das mehrschichtige Isolierungsprodukt nach einem der vorstehenden Ansprüche, wobei Schicht A, Schicht B und Schicht C durch einen Klebstoff, ausgewählt aus einer Gruppe bestehend aus Zweikomponentenklebstoff, Haftklebstoff, Schmelzklebstoff oder lösungsmittelbasiertem Kontaktklebstoff oder einer Kombination davon, verbunden sind,
wobei der Klebstoff vorzugsweise ein Haftklebstoff oder lösungsmittelbasierter Kontaktklebstoff ist.

12. Das mehrschichtige Isolierungsprodukt nach einem der vorhergehenden Ansprüche, bestehend aus Schicht A, B und C.

13. Ein Verfahren zur Herstellung des mehrschichtigen Isolierungsprodukts nach einem der vorhergehenden Ansprüche, umfassend einen Schritt:
Aufbringen einer Kombination der Schichten A und B auf Schicht C,
oder
umfassend die Schritte
(a) Aufbringen von Schicht B auf Schicht C und
(b) Aufbringen von Schicht A auf Schicht B;
um das mehrschichtige Isolierungsprodukt zu bilden.

14. Das Verfahren nach Anspruch 13, wobei Schicht B vor Schritt (a) mit einem Klebstoff imprägniert wird.

15. Verwendung des mehrschichtigen Isolierungsprodukts nach einem der vorhergehenden Ansprüche zur Isolierung eines Substrats,
wobei das Substrat vorzugsweise aus einer Gruppe bestehend aus Wand, Boden, Decke, Möbeln, Rohr und Behälter ausgewählt ist.

16. Verwendung eines Produkts, das Schicht A wie in einem der Ansprüche 1 bis 12 definiert umfasst, zur Herstellung des mehrschichtigen Isolierungsprodukts nach einem der Ansprüche 1 bis 12.

## Revendications

1. Produit d'isolation multicouche (MIP) comprenant au moins trois couches A, B et C, dans lequel
- la couche A est une couche extérieure comprenant au moins une mousse élastomère flexible (FEF), laquelle couche A
(a1) a une épaisseur d'au moins 2 mm,
(a2) a une conductivité thermique < 0,0500 W/m·K à 0 °C conformément à la norme DIN EN 12667 lors d'une mesure sous la forme d'une feuille ou conformément à la norme DIN EN ISO 8497 lors d'une mesure sous la forme d'un tube, et
(a3) a un indice de vitesse de développement du feu (FIGRA) < 250 W/s, un dégagement de chaleur total (THR₆₀₀ₛ) < 15,0 MJ, une vitesse de développement de la fumée (SMOGRA) < 180 m²/s², et une production de fumée totale (TSP₆₀₀ₛ) < 200 m² conformément à la norme EN 13823 lors d'une mesure sous la forme d'une feuille ;
ou un indice de vitesse de développement du feu (FIGRA) < 460 W/s, un dégagement de chaleur total (THR₆₀₀ₛ) < 15,0 MJ, une vitesse de développement de la fumée (SMOGRA) < 580 m²/s², et une production de fumée totale (TSP₆₀₀ₛ) < 1 600 m² conformément à la norme EN 13823 lors d'une mesure sous la forme d'un tube ;
- la couche B est disposée entre la couche A et la couche C,
laquelle couche B comprend au moins un matériau fibreux inorganique, sous la forme d'un matériau tissé ou intissé, lequel matériau fibreux inorganique est choisi parmi les fibres de verre, les fibres minérales, les fibres céramiques et l'une quelconque de leurs combinaisons,
laquelle couche B a un grammage < 200 g/m²,
dans laquelle le terme "tissé" se réfère à n'importe quel matériau en fibres, filaments continus, ou fils coupés de quelconque nature ou origine, qui ont été assemblés mécaniquement d'une manière non aléatoire par tissage, tricotage, liage, feutrage ou touffetage,
et dans laquelle le terme "intissé" se réfère à n'importe quel matériau en fibres, filaments continus, ou fils coupés de quelconque nature ou origine, qui ont été mis sous la forme d'une toile par un moyen quelconque, et liés ensemble par un moyen quelconque, à l'exception d'un tissage ou d'un tricotage ; et
- la couche C est une couche intérieure comprenant au moins un matériau d'isolation,
laquelle couche C
(c1) a une épaisseur égale ou supérieure à l'épaisseur de la couche A, et
(c2) a une conductivité thermique < 0,0400 W/m·K à 0 °C conformément à la norme DIN EN 12667 lors d'une mesure sous la forme d'une feuille ou conformément à la norme DIN EN ISO 8497 lors d'une mesure sous la forme d'un tube.

2. Produit d'isolation multicouche selon la revendication 1, dans lequel le matériau fibreux inorganique est sous la forme d'un matériau fibreux tissé.

3. Produit d'isolation multicouche selon la revendication 1 ou 2, dans lequel le matériau fibreux inorganique consiste en des fibres de verre.

4. Produit d'isolation multicouche selon l'une quelconque des revendications précédentes, dans lequel la couche B a un grammage < 100 g/m², de préférence < 50 g/m², mieux encore < 30 g/m².

5. Produit d'isolation multicouche selon l'une quelconque des revendications précédentes, dans lequel la couche C a une épaisseur d'au moins deux fois l'épaisseur de la couche A.

6. Produit d'isolation multicouche selon l'une quelconque des revendications précédentes, dans lequel la couche C a un taux de transmission de la vapeur d'eau ≥ 2 000, de préférence ≥ 5 000, mieux encore ≥ 7 000 conformément à la norme DIN EN 12086 lors d'une mesure sous la forme d'une feuille ou conformément à la norme DIN EN 13469 lors d'une mesure sous la forme d'un tube.

7. Produit d'isolation multicouche selon l'une quelconque des revendications précédentes, dans lequel la couche C a une absorption d'eau sous vide < 5,0 %, de préférence < 2,5 % conformément à la norme ASTM D 1056.

8. Produit d'isolation multicouche selon l'une quelconque des revendications précédentes, dans lequel le matériau d'isolation compris dans la couche C est choisi dans le groupe constitué par les mousses élastomères, les mousses thermoplastiques, la laine minérale, les couvertures en textile et l'une quelconque de leurs combinaisons, de préférence les mousses élastomères flexibles (FEF), les mousses de polyéthylène flexibles (PEF) et les mousses de poly(téréphtalate d'éthylène) (PET),
mieux encore le matériau d'isolation compris dans la couche C est sous la forme d'une mousse élastomère flexible.

9. Produit d'isolation multicouche selon l'une quelconque des revendications précédentes, dans lequel la mousse élastomère flexible comprise dans la couche A comprend un polymère choisi parmi un élastomère d'éthylène-propylène-diène (EPDM), un caoutchouc chloroprène (CR), un polyéthylène chlorosulfoné (CSM), un caoutchouc styrène-butadiène (SBR), un caoutchouc nitrile butadiène (NBR), un poly(chlorure de vinyle) (PVC), un polyéthylène chloré (CPE ou CM), un caoutchouc bromobutyle (BIIR), un caoutchouc chlorobutyle (CIIR) ou l'une quelconque de leurs combinaisons, de préférence un caoutchouc chloroprène (CR), un polyéthylène chlorosulfoné (CSM) et un polyéthylène chloré (CPE ou CM).

10. Produit d'isolation multicouche selon l'une quelconque des revendications précédentes, dans lequel la mousse élastomère flexible comprise dans la couche A et la mousse élastomère flexible comprise dans la couche C sont identiques ou différentes l'une de l'autre, de préférence différentes l'une de l'autre.

11. Produit d'isolation multicouche selon l'une quelconque des revendications précédentes, dans lequel la couche A, la couche B et la couche C sont connectées par un adhésif choisi dans le groupe constitué par un adhésif à deux composants, un adhésif sensible à la pression, un adhésif de contact thermofusible ou à base de solvant, et l'une quelconque de leurs combinaisons,
de préférence l'adhésif est un adhésif sensible à la pression ou un adhésif de contact à base de solvant.

12. Produit d'isolation multicouche selon l'une quelconque des revendications précédentes, consistant en les couches A, B et C.

13. Procédé de production du produit d'isolation multicouche de l'une quelconque des revendications précédentes, comprenant une étape de :
application d'une combinaison des couches A et B sur la couche C,
ou comprenant les étapes de :
(a) application de la couche B sur la couche C, et
(b) application de la couche A sur la couche B ;
pour former le produit d'isolation multicouche.

14. Procédé selon la revendication 13, dans lequel la couche B est imprégnée d'un adhésif avant l'étape (a).

15. Utilisation du produit d'isolation multicouche de l'une quelconque des revendications précédentes pour isoler un substrat,
de préférence dans laquelle le substrat est choisi dans le groupe constitué par un mur, un sol, un plafond, un meuble, un tuyau et un réservoir.

16. Utilisation d'un produit comprenant une couche A comme définie dans l'une quelconque des revendications 1 à 12 pour produire le produit d'isolation multicouche de l'une quelconque des revendications 1 à 12.
